Europäisches Patentamt

European Patent Office

Office européen des brevets

(11) Publication number: **0 177 282 B1**

# EUROPEAN PATENT SPECIFICATION

(45) Date of publication of patent specification: **26.02.92**  (51) Int. Cl.⁵: **C12G 3/08, A23L 2/12**

(21) Application number: **85306868.2**

(22) Date of filing: **26.09.85**

(54) **Low alcohol wine.**

(30) Priority: **27.09.84 AU 7363/84**

(43) Date of publication of application:
**09.04.86 Bulletin 86/15**

(45) Publication of the grant of the patent:
**26.02.92 Bulletin 92/09**

(84) Designated Contracting States:
**AT BE CH DE FR GB IT LI LU NL SE**

(56) References cited:
**EP-A- 0 164 911**
**FR-A- 318 619**
**FR-A- 805 519**
**US-A- 4 363 264**

(73) Proprietor: **PROCESSING TECHNOLOGIES IN-TERNATIONAL LIMITED**
**Cedar House 41 Cedar Avenue**
**Hamilton HM 12(BM)**

(72) Inventor: **Lang, Timothy Ralston**
**4 Lawley Crescent**
**Pymble New South Wales(AU)**
Inventor: **Casimir, Donald John**
**10 Anembo Crescent**
**Killara New South Wales(AU)**

(74) Representative: **Everitt, Christopher James Wilders et al**
**F.J. CLEVELAND & COMPANY 40/43 Chancery Lane**
**London WC2A 1JO(GB)**

EP 0 177 282 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a method for the production of low alcohol wine and to a low alcohol wine so produced.

Wine is the fermented juice of fruit, particularly grapes. The natural alcohol content of wine will depend upon the sugar content of the fruit juice. Typically grapes when picked ripe will yield a juice containing about 19% by weight fermentable sugar. Such juice, if fermented to dryness, i.e. to a point where all the sugar is consumed, will have an alcohol content of about 12% by volume. It is possible to stop the fermentation before all the sugar has been fermented however this will necessarily result in a sweet wine. The degree of sweetness in low alcohol wines produced by this method is unacceptable.

It is also known to ferment the fruit juice to dryness and then to de-alcoholise the wine by, for instance, vacuum evaporation . This process is both expensive and deleterious to wine quality.

In another process as disclosed in US-A-4,468,407 (Vella), there is provided a method of producing low alcohol wine wherein a standard alcoholic beverage is cooled to produce a liquid fraction which is high in alcohol and a solid fraction that is low in alcohol. The advantage of this process lies in the use of low temperature to separate the fractions thereby ensuring minimal loss of flavour.

The present inventors have developed an alternative approach to the production of low alcohol wine by separating the unfermented fruit juice into a high sugar fraction and a low sugar fraction, removing volatile components from the unfermented fruit juice or from the high sugar fraction and transferring them to the low sugar fraction which is then fermented. In this way low alcohol wine may be produced cheaply and the neutral, or deflavoured, high sugar stream is available for other uses.

The present invention consists in a method for the production of low alcohol wine comprising separating a fruit juice into a high sugar fraction and a low sugar fraction, stripping volatile components, such as high-boiling point esters, from the fruit juice or from the high sugar fraction and adding them to the low sugar fraction, and fermenting the low sugar fraction.

A preferred embodiment of the present invention includes a process for the separation of a sugar containing liquid into a high sugar fraction and a low sugar fraction, comprising cooling the liquid until at least a part, but preferably not all, of the liquid is frozen and forms particulate solids, passing the so frozen slush into an inlet end of an extractor comprising a housing which is upwardly inclined from its inlet end to an outlet end, and a helical screw conveyor disposed in the housing, rotating the helical screw conveyor and intermittently changing the direction of rotation of the screw conveyor while maintaining a net forward motion of the solids from the inlet end to the outlet end of the conveyor in a manner such that the low sugar containing solids are discharged from the outlet end of the extractor and the high sugar fraction of unfrozen or melted liquid drains from the lower, inlet, end of the extractor.

The process comprises separating a solute containing liquid into a high solute fraction and a low solute fraction comprising cooling the liquid until at least a part of the liquid is frozen and forms particulate solids, passing the so frozen liquid into an inlet end of an extractor comprising a housing which is upwardly inclined from its inlet end to an outlet end, and a helical screw conveyor disposed in the housing, rotating the helical screw conveyor and intermittently changing the direction of rotation while maintaining a net forward motion of the solids from the inlet end to the outlet end of the conveyor and removing any unfrozen or melted liquid from the inlet end of the extractor such that a solid, high solute, fraction is produced at the outlet end of the extractor and a liquid low solute, fraction is produced at the inlet end of the extractor.

While this process is particularly adapted for use with aqueous solutions it could also be used with organic solutions. The process is hereinafter described with reference to sugar solutions but the process could equally well be used with other solutions. As an example the process could be used for concentrating ethanol in aqueous solutions.

In preferred embodiments of the invention the fruit juice will be grape juice however the juice of other fruits could also be similarly treated to produce low alcohol wines. The fruit are preferably crushed, dejuiced and pressed in a conventional manner. The juice may also be clarified and refrigerated if desired, again in a conventional manner.

The juice is separated into a high sugar stream and a low sugar stream. This is most preferably done by freezing the juice to form a slush containing a solid low sugar fraction and a liquid high sugar fraction. The solid low sugar fraction will be separated from the high sugar fraction. It will be appreciated that the separation into high and low sugar fractions could also be carried out by ultrafiltration, reverse osmosis, centrifugation, flotation or rotary vacuum filtration, or by any other suitable technique.

If the juice is to be separated into fractions by freezing to form a slush this is best done in a scraped surface slush freezer although it will be appreciated that other types of freezer could be used. The slush is most preferably separated into its solid and liquid components in a counter-current diffusion extractor such as is described in US-A-4,363,264. In this equipment the liquid fraction may be drained from the solid frozen fraction. In addition water, fruit juice or melted low sugar fraction may be run in counter-current with the slush. This will have the effect of carrying the high sugar solution clear of the frozen particles of the low sugar fraction and enhance the separation of the high and low sugar fractions. The absolute concentration of the sugar in the high sugar stream will however be lowered by the use of such a counter-current stream. The use of this apparatus has been found to bring about the efficient separation of the solids from the liquid. The intermittent reversal of direction of the screw conveyor has been found to prevent the icy solids from compacting into a solid block which would be difficult to handle and from which it would be difficult to get the high sugar fraction to drain.

The ratio of the volume of the high sugar fraction to the volume of the low sugar fraction is preferably from 40:60 to 70:30, more preferably from 50:50 to 60:40. The sugar content of the two fractions preferably varies by from 2 to 30% by weight of sugar, more preferably from 10 to 25% by weight. The high sugar fraction will typically contain from 20 to 30% by weight of sugar while the low sugar fraction will typically contain from 5 to 15% by weight of sugar.

The high sugar fraction will contain, in addition to the sugar, a number of volatile components which are typically high boiling point esters. These volatile components give to the finished wine flavours which are characteristic of the fruit and/or of the particular variety of the fruit from which the juice is derived. These esters are stripped from the high sugar fraction and added to the low sugar fraction in appropriate concentration. This stripping of the high boiling point esters may be done in any suitable fractional distillation column however it is preferably done in a spinning cone column such as is described in AU-A-62264/73. In columns of this type radial fins reduce the pressure across the column. This allows high separation efficiencies to be achieved at low distillation temperatures.

The stripped component from the high sugar fraction typically comprises from 1 to 15% by volume of that fraction, preferably 6 to 11% by volume. The remaining neutral high sugar fraction will contain a substantial amount of fruit derived sugar and may be used for fermentation and subsequent distillation to fortifying spirit, for addition to wine for sweetening purposes, or for addition to canning syrups and the like for use in the food industry.

A third component may be added to the low sugar fraction if desired. This third component is derived from the pressed skins of the fruit and may be used to add acid, flavour, tannins and colour to the low sugar fraction. This third component, hereinafter called the skin fraction, is particularly useful in the making of wine from grapes. In this fruit significant flavourants and colourants are largely contained in the grape skins and it is desirable that a proportion of these materials be incorporated into the finished wine.

The skin fraction is formed by extracting the pressed skins, commonly referred to as marc, with water or with low sugar fraction and clarifying the skin fraction if desired. The extraction is preferably carried out in a counter current diffusion extractor substantially as described in US-A-4,363,264.

In this apparatus the pressed skins of the fruit are conveyed in one direction by the screw conveyor while a counter flowing liquid such as water, the low sugar fraction or raw grape juice is flowed in the other direction through the housing containing the screw conveyor. If desired the skin fraction is clarified in a conventional manner. If the counter flowing liquid bringing about the extraction is water it may be desirable to concentrate the skin fraction prior to its addition to the low sugar fraction. This concentration may be brought about by evaporation, membrane separation or any other conventional technique.

Hereinafter described by way of example only is a preferred embodiment of the present invention described with reference to the accompanying drawings in which:-

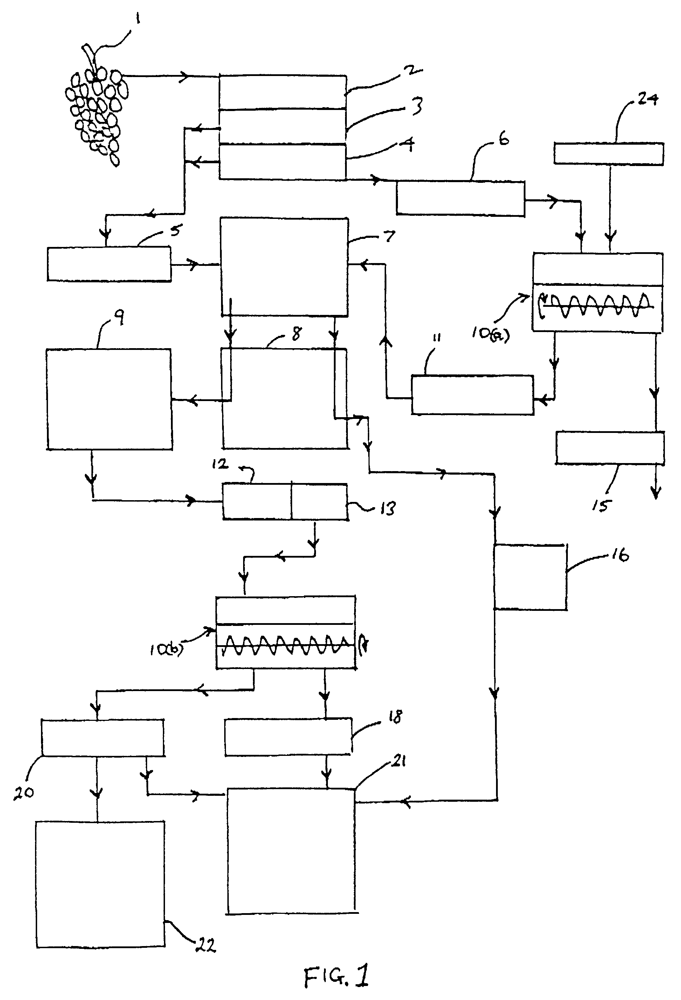

Fig. 1 is a flow diagram showing a process for making low alcohol wine, and

Fig. 2 is a longitudinal vertical section through an extractor for carrying out the separation of a sugar containing liquid into a high sugar stream and a low sugar stream.

Grapes 1 are fed to a crusher 2, a dejuicer 3 and a press 4 for crushing and pressing in a conventional way. The unclarified juice amounted to approximately 820 litres of juice per tonne of grapes crushed and had a sugar content of 19% by weight. The juice was run into a tank 5.

The juice from tank 5 was clarified in a clarifier 7 which comprised a centrifuge, a rotary drum solids filter or a pressure leaf filter and the clarified juice was cooled in refrigerator 8 and passed to cold room 9 for storage at a temperature of about -2°C.

The stored juice is, as required, passed through a plate heat exchanger 12 which receives the cooled juice from cold room 9 and passes it to a scraped surface slush freezer 13.

In the scraped surface slush freezer 13 the juice is partly frozen to form a slush having a solid phase of a relatively dilute sugar content - the low sugar fraction - and a liquid phase of a relatively concentrated sugar content - the high sugar fraction.

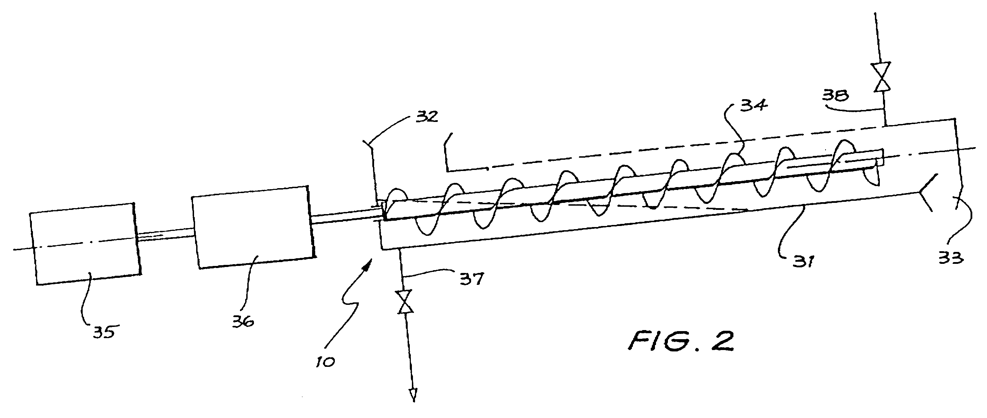

The slush so formed is passed to a counter current extractor 10(b) substantially as described with reference to US-A-4,363,264, except that there is no heating. Fig. 2 shows a suitable counter current diffusion extractor 10 which comprises a trough-like housing 31 having an inlet 32 at one end and an outlet 33 at the other. The housing is inclined upwardly from its inlet end 32 to its outlet end 33. A helical screw conveyer 34 is disposed within the housing 31 and is arranged to be rotated about its own longitudinal axis. The conveyer 34 is rotated by a motor 35. A gear box 36 disposed between the motor 35 and conveyer 34 causes the direction of rotation of the conveyer 34 to be intermittently changed while preserving a net forward motion of any solids in the extractor 10 towards the outlet end 33 of the housing 31. A liquids outlet 37 is provided at the lower end of the housing and a liquids inlet 38 is provided at the upper end of the housing to allow the passage of a liquid in counter current with the solids in the extractor 10 if required.

The solids in the slush from the scraped surface slush freezer 13 are carried upwardly through the extractor 10(b) by the screw conveyer 34. The intermittent reversal of direction of the screw conveyer 34 increases the efficiency with which the high sugar fraction is drained from the solids and removed with the added counterflowing liquid stream or remelt as required. This also prevents compaction of the solids into large frozen blocks.

On discharge from the outlet 33 of the extractor 10(b) the solid low sugar fraction is passed through a heat exchanger 18 to facilitate its melting and then into tank 21. Typically the low sugar fraction was produced in an amount of 320 litres per tonne of grapes pressed and had a sugar content of 10% by weight.

The liquid fraction discharged through liquid outlet 37 is the high sugar fraction and comprised typically 480 litres per tonne of grapes pressed and had a sugar content of 28% by weight. This high sugar fraction contains many of the flavourant compounds which give the wine its characteristic flavour. These are stripped in a spinning cone column 20 having 40 cone sets and a 6 inch diameter. Fins are present on the underside of the rotating plates as described in AU-A-62264/73. The operation of the column was adjusted such that about 50 litres of stripped flavourant fraction was removed from the high sugar fraction per tonne of grapes pressed. These flavourants were combined in tank 21 with the low sugar fraction. The stripped high sugar fraction was stored in tank 22.

The pressed skins 6 from the press 4 were passed to another counter current extractor 10(a) where they were passed in counter current with water 24. The extracted skins 15 which had passed through the outlet 33 of the extractor 10(a) were dumped. The extract skin fraction 11 amounted to 100 litres per tonne of grapes crushed and had a 10% sugar content. The skin fraction 11 was fined, clarified in clarifier 7, refrigerated in refrigerator 8 and stored in cold room 16. This clarified and chilled skin fraction was added to the low sugar fraction in tank 21 yielding a total combined low sugar fraction of 420 litres per tonne of grapes and having about a 10% sugar content by weight.

The low sugar fraction was fermented and clarified in the usual way to yield a low alcohol wine containing 6% alcohol by volume and representing 400 litres per tonne of grapes crushed. If desired this wine, which is dry could be sweetened by the addition of some of the low sugar fraction or juice after fermentation has been completed. This will further reduce the alcohol content of the finished wine to about 5%.

## Claims

1. A method for the production of low alcohol wine comprising separating a fruit juice into a high sugar fraction and a low sugar fraction, stripping volatile components, such as high-boiling point esters, from the fruit juice or from the high sugar fraction and adding them to the low sugar fraction, and fermenting the low sugar fraction.

2. A method as claimed in claim 1 wherein the juice is frozen to form a slush, and said slush is filtered to yield a solid low sugar fraction and a liquid high sugar fraction.

3. A method as claimed in claim 1 wherein the juice is frozen to form a slush, said slush is passed into an inlet end (32) of an extractor (10(b)) comprising a housing (31), which is upwardly inclined from its inlet end to an outlet end (33), and a helical screw conveyer (34) disposed in the housing **(31)**, rotating the helical screw conveyer (34) and intermittently changing the direction of rotation of the screw conveyer (34) while maintaining a net forward motion of the solids from the inlet end (32) to the outlet end (33), of the conveyer (34) in a manner such that a solid low sugar containing fraction is discharged from the outlet end (33) of the extractor (10(b)) and a high sugar containing fraction of unfrozen or melted liquid drains from the lower inlet end (32) of the extractor (10(b)).

4. A method as claimed in claim 3 wherein water, fruit juice or melted low sugar fraction is run in counter-current with the slush.

5. A method as claimed in any one of claims 1 to 4 wherein the ratio of the volume of the high sugar fraction to the volume of the low sugar fraction is from 40:60 to 70:30.

6. A method as claimed in any one of claims 1 to 4 wherein the ratio of the volume of the high sugar fraction to the volume of the low sugar fraction is from 50:50 to 60:40.

7. A method as claimed in claim 1 wherein volatile components are stripped from the high sugar fraction using a spinning cone fractional distillation column (20).

8. A method as claimed in claim 7 wherein 1 to 15% of volatile component by volume of said high sugar fraction is stripped.

9. A method as claimed in any one of claims 1 to 8 wherein a skin fraction (11) formed by extracting pressed skin (6) off fruit with water or low sugar fraction is added to the finished wine.

10. A method as claimed in claim 1, comprising the steps of freezing the fruit juice to form a slush, separating the slush into a liquid high sugar fraction and a solid low sugar fraction, the volume ratio of said high sugar fraction to said low sugar fraction being from 40:60 to 70:30, each fraction having a sugar content of from 2 to 30% by weight, melting the low sugar fraction, stripping said volatile components in an amount of from 1 to 15% by volume from either said fruit juice or the high sugar fraction obtained after slush separation, forming a skin extract by extracting skins (6) with water or the aforesaid low sugar fraction and adding the resultant skin extract (11) to the low sugar fraction.

**Revendications**

1. Une méthode pour la production de vin à faible teneur en alcool comprenant la séparation d'un jus de fruit en une fraction à forte teneur en sucre et une fraction à faible teneur en sucre, le stripping des éléments volatils, tels les esters à point d'ébullition élevé, à partir du jus de fruit ou de la fraction à forte teneur en sucre et leur addition à la fraction à faible teneur en sucre, et la fermentation de la fraction à faible teneur en sucre.

2. Une méthode selon la revendication 1, dans laquelle le jus est congelé pour former une bouillie, et ladite bouillie est filtrée pour obtenir une fraction solide à faible teneur en sucre et une fraction liquide à forte teneur en sucre.

3. Une méthode selon la revendication 1, dans laquelle le jus est congelé pour former une bouillie, ladite bouillie est introduite par un orifice d'entrée (32) d'un extracteur (10(b)) comprenant une cuve (31) qui est inclinée vers le haut depuis l'orifice d'entrée jusqu'à l'orifice de sortie (33), et une hélice transporteuse (34) placée dans la cuve (31), en faisant tourner l'hélice transporteuse (34) et en changeant par intermittence la direction de rotation de l'hélice transporteuse (34) tout en maintenant une marche avant des solides depuis l'orifice d'entrée (32) jusqu'à l'orifice de sortie (33) de l'hélice transporteuse (34) de telle sorte qu'une fraction contenant la partie solide à faible teneur en sucre est évacuée par l'orifice de sortie (33) de l'extracteur (10(b)) et une fraction à haute teneur en sucre contenant le liquide dégelé ou fondu s'écoule par l'orifice d'entrée (32) placé à la partie basse de l'extracteur (10(b)).

4. Une méthode selon la revendication 3, dans laquelle de l'eau, du jus de fruit ou une fraction fondue à faible teneur en sucre est envoyé à contre-courant de la bouillie.

5. Une méthode selon l'une quelconque des revendications 1 à 4, dans laquelle la proportion du volume de la fraction à forte teneur en sucre par rapport à la fraction à faible teneur en sucre est comprise entre 40:60 et 70:30.

6. Une méthode selon l'une quelconque des revendications 1 à 4, dans laquelle la proportion du volume de la fraction à forte teneur en sucre par rapport à la fraction à faible teneur en sucre est comprise entre 50:50 et 60:40.

7. Une méthode selon la revendication 1, dans laquelle les éléments volatils sont strippés de la fraction à forte teneur en sucre à l'aide d'une colonne de distillation fractionnée à cône tournant (20).

8. Une méthode selon la revendication 7, dans laquelle 1 à 15% des éléments volatils par volume de ladite fraction à forte teneur en sucre sont strippés.

9. Une méthode selon l'une quelconque des revendications 1 à 8, dans laquelle une fraction de peau (11) formée en extrayant de la peau pressée (6) à partir du fruit à l'aide d'eau ou de la fraction à faible teneur en sucre est ajoutée au vin fini.

10. Une méthode selon la revendication 1, comprenant les étapes de congélation du jus de fruit pour former une bouillie, la séparation de la bouillie en une fraction liquide à forte teneur en sucre et une fraction solide à faible teneur en sucre, le rapport de volume de ladite fraction à forte teneur en sucre et de la fraction à faible teneur en sucre se situe entre 40:60 et 70:30, chaque fraction ayant un contenu en sucre de 2 à 30% en poids, la fonte de la fraction à faible teneur en sucre, le stripping desdits éléments volatils dans une proportion de 1 à 15% en volume à partir soit du jus de fruit, soit de la fraction à forte teneur en sucre obtenue après la séparation de la bouillie, la formation d'un extrait de peau par l'extraction de peaux (6) à l'aide d'eau ou de la fraction à faible teneur en sucre déjà mentionnée et l'addition de l'extrait de peau ainsi obtenu (11) à la fraction à faible teneur en sucre.

**Patentansprüche**

1. Verfahren zur Herstellung alkoholarmen Weins, bei dem man einen Fruchtsaft in eine zuckerreiche Fraktion und eine zuckerarme Fraktion trennt, flüchtige Bestandteile wie hochsiedende Ester von dem Fruchtsaft oder von der zuckerreichen Fraktion abzieht und der zuckerarmen Fraktion hinzugibt, und die zuckerarme Fraktion fermentiert.

2. Verfahren nach Anspruch 1, worin man den Saft unter Bildung eines Schlamms gefriert und jenen Schlamm filriert, wodurch man eine feste zuckerarme Fraktion und eine flüssige zuckerreiche Fraktion erhält.

3. Verfahren nach Anspruch 1, worin man den Saft unter Bildung eines Schlamms gefriert, jenen Schlamm einem Einlaßende (32) einer Extraktionskolonne (10(b)) mit einem Gehäuse (31) zuführt, welches von seinem Einlaßende zu einem Auslaßende (33) nach oben geneigt ist, und mit einer im Gehäuse (31) angebrachten Förderschnecke (34), die Förderschnecke (34) dreht und die Drehrichtung der Förderschnecke (34) bei Aufrechterhaltung einer Nettovorwärtsbewegung der Feststoffe vom Einlaßende (32) zum Auslaßende (33) der Förderschnecke (34) derart intermittierend ändert, daß eine feste Fraktion mit niedrigem Zuckergehalt vom Auslaßende (33) der Extraktionskolonne (10(b)) abgezogen wird und eine Fraktion mit hohem Zuckergehalt aus nicht gefrorener oder geschmolzener Flüssigkeit am unteren Einlaßende (32) der Extraktionskolonne (10(b)) abläuft.

4. Verfahren nach Anspruch 3, worin Wasser, Fruchtsaft oder geschmolzene zuckerarme Fraktion im Gegenstrom mit dem Schlamm geführt wird.

5. Verfahren nach einem der Ansprüche 1 bis 4, worin das Verhältnis des Volumens an zuckerreicher Fraktion zum Volumen an zuckerarmer Fraktion von 40:60 bis 70:30 beträgt.

6. Verfahren nach einem der Ansprüche 1 bis 4, worin das Verhältnis des Volumens an zuckerreicher Fraktion zum Volumen an zuckerarmer Fraktion von 50:50 bis 60:40 beträgt.

7. Verfahren nach Anspruch 1, worin flüchtige Bestandteile von der zuckerreichen Fraktion mittels einer fraktionierten Destillationskolonne mit rotierendem Kegel (20) abgezogen werden.

8. Verfahren nach Anspruch 7, worin 1 bis 15 Volumenprozent an flüchtigem Bestandteil jener zuckerreichen Fraktion abgezogen werden.

9. Verfahren nach einem der Ansprüche 1 bis 8, worin man eine durch Extrahieren gepresster Obsthaut (6) mit Wasser oder zuckerarmer Fraktion gebildete Hautfraktion (11) zum fertigen Wein gibt.

10. Verfahren nach Anspruch 1, bestehend aus folgenden Schritten: Gefrieren des Fruchtsafts unter Bildung eines Schlamms, Trennung des Schlammes in eine flüssige zuckerreiche Fraktion und eine feste zuckerarme Fraktion, wobei das Volumenverhältnis jener zuckerreichen Fraktion zu jener zuckerarmen Fraktion von 40:60 bis 70:30 beträgt, wobei jede Fraktion einen Zuckergehalt von 2 bis 30 Gewichtsprozent aufweist, Schmelzen der zuckerarmen Fraktion, Abziehen jener flüchtigen Bestandteile in einer Menge von 1 bis 15 Volumenprozent entweder von jenem Fruchtsaft oder der zuckerreichen, nach Trennung des Schlammes erhaltenen Fraktion, Bildung eines Hautextrakts durch Extrahieren von Haut (6) mit Wasser oder der obenerwähnten zuckerarmen Fraktion und Versetzen der zuckerarmen Fraktion mit dem gebildeten Hautextrakt (11).

FIG. 1

FIG.2